# EUROPÄISCHE PATENTANMELDUNG

(11) **EP 3 878 780 A1**
(43) Veröffentlichungstag der Anmeldung: **15.09.2021**
(21) Anmeldenummer: 21171846.5
(22) Anmeldetag: 19.02.2018
(51) Int. Cl.: B65G 53/60, B65G 53/52

(54) **FÖRDERANLAGE ZUM FÖRDERN VON KUNSTSTOFFGRANULAT**

(30) Priorität: 24.02.2017 DE 102017203089
(62) Teilanmeldung aus: 18157375.9
(71) Anmelder: Coperion GmbH, 70469 Stuttgart (DE)
(72) Erfinder: Stark, Bernhard, 88273 Fronreute (DE); Dürr, Michael, 88364 Wolfegg (DE); Vögele, Thomas, 88521 Binzwangen (DE); Dikreuter, Christian, 88090 Immenstaad (DE); Toni, Christian, 88214 Ravensburg (DE)
(74) Vertreter: Rau, Schneck & Hübner Patentanwälte Rechtsanwälte PartGmbB

(57) **Zusammenfassung**

Eine Förderanlage für Kunststoffgranulat umfasst einen Aufgabeort (5), an dem das Kunststoffgranulat mit Druck beaufschlagtem Fördergas in eine Förderleitung (4) aufgegeben wird, einen mit dem Aufgabeort (5) in Förderverbindung stehenden Zielort (15), eine Befeuchtungseinheit (9) zum Befeuchten des Fördergases und/oder des Kunststoffgranulats durch Hinzugeben von Flüssigkeit, wobei am Zielort (15) eine Abtrennvorrichtung (11) zum Abtrennen des feuchten Fördergases von dem Kunststoffgranulat vorgesehen ist.

## Beschreibung

Die vorliegende Patentanmeldung nimmt die Priorität der deutschen Patentanmeldung DE 10 2017 203 089.5 in Anspruch, deren Inhalt durch Bezugnahme hierin aufgenommen wird.

Die Erfindung betrifft eine Förderanlage für Kunststoffgranulat sowie.

Die EP 2 712 881 B1 offenbart ein Verfahren und eine Vorrichtung zur Direktkristallisation von Polymeren unter Inertgas. Die DE 27 20 094 A1 offenbart ein Verfahren und eine Vorrichtung zum Abtrennen der Luft von pneumatisch geförderten Granulaten und Pulvern.

Aus DE 198 40 502 C1 ist ein Verfahren zum pneumatischen Fördern von Kunststoffgranulat bekannt. Durch Zugabe von Flüssigkeit kann die Bildung staubförmigen Abriebs und die Entstehung sogenannten "Engelshaars" vermindert werden. Gemäß der DE 198 40 502 C1 erfolgt eine gesteuerte Flüssigkeitszugabe derart, dass die relative Feuchte des Fördergases am Zielort unterhalb der Sättigungsgrenze liegt. Dazu ist eine vergleichsweise aufwändige Steuerung erforderlich. Die zugegebene Flüssigkeit kann bei Veränderungen der Prozessparameter am Zielort und damit einhergehender Veränderung der Sättigungsgrenze des Fördergases, in einem Empfangsbehälter auskondensieren und die Lagerung und die weitere Handhabung des Kunststoffgranulats beeinträchtigen.

Es ist eine Aufgabe der vorliegenden Erfindung, einerseits die Vorteile einer pneumatischen Förderung unter Zugabe von Flüssigkeit zu nutzen und andererseits das Auskondensieren der Flüssigkeit am Zielort, insbesondere in einem Empfangsbehälter, zuverlässig und unaufwändig auszuschließen.

Diese Aufgabe ist erfindungsgemäß gelöst durch eine Förderanlage mit den im Anspruch 1 angegebenen Merkmalen.

Erfindungsgemäß wurde erkannt, dass eine Kondensation von feuchtem Fördergas am Zielort dadurch zuverlässig ausgeschlossen werden kann, dass das feuchte Fördergas mittels einer Abtrennvorrichtung von dem Kunststoffgranulat abgetrennt wird. Das Abtrennen erfolgt insbesondere mittels eines Austauschgases, das insbesondere im Vergleich zu dem feuchten Fördergas trocken ist. Insbesondere ist die relative Feuchte des Austauschgases bei vergleichbaren Prozessbedingungen kleiner als die relative Feuchte des Fördergases. Die relative Feuchte der Mischung aus dem Fördergas und dem Austauschgas am Ende der Förderleitung ist in Abhängigkeit der Prozessbedingungen höchstens 100 %, insbesondere höchstens 80 %, und insbesondere höchstens 60 %. Es ist insbesondere denkbar, dass kaltes Austauschgas eine relative Feuchte von 100 % oder mehr aufweisen kann, wobei die relative Feuchte des Austauschgases durch Kontaktierung mit warmem Kunststoffgranulat und/oder Fördergas eine Reduzierung der relativen Feuchte der Mischung aus Fördergas und Austauschgas auf unter 100 % bewirken kann.

Das feuchte Fördergas wird von dem Materialstrom in der Förderanlage abgeschieden. Die Abtrennvorrichtung kann auch als Abscheidevorrichtung bezeichnet werden.

Es wird verhindert, dass feuchtes Fördergas am Zielort, insbesondere innerhalb eines Empfangsbehälters, auskondensiert. Als Fördergas dient insbesondere Luft. Das Fördergas wird deshalb auch als Förderluft bezeichnet. Der Zielort steht mit einem Aufgabeort in Förderverbindung zur pneumatischen Förderung des Kunststoffgranulats. An dem Aufgabeort wird das Kunststoffgranulat mit Druck beaufschlagtem Fördergas in eine Förderleitung aufgegeben. Das Kunststoffgranulat ist in einem vorangegangenen Granulationsprozesshergestellt worden. In einem der Granulation nachfolgendem Kristallisationsprozess kann der Aufbau des Polymers modifiziert werden. Das so hergestellte Kunststoffgranulat kann in der Förderanlage von dem Aufgabeort zu dem Zielort gefördert werden. Zusätzliche Herstell- oder Bearbeitungsschritte zur Fertigstellung des Kunststoffgranulats sind, insbesondere innerhalb der Förderanlage, nicht erforderlich. Das Kunststoffgranulat ist fertig hergestellt am Aufgabeort verfügbar. Das Kunststoffgranulat weist einen äquivalenten Teilchendurchmesser von 2 mm bis 5 mm einer volumengleichen Kugel auf.

Eine Befeuchtungseinheit dient zum Befeuchten des Fördergases und/oder des Kunststoffgranulats durch Hinzugeben von Flüssigkeit. Als Flüssigkeit zum Befeuchten des Fördergases dient insbesondere Wasser, insbesondere demineralisiertes Wasser. Die Befeuchtungseinheit umfasst insbesondere einen separaten Flüssigkeitsanschluss, um Flüssigkeit unmittelbar dem Fördergas und/oder dem Kunststoffgranulat zuzugeben. Es können auch mehrere Befeuchtungseinheiten vorgesehen sein, um entlang des Förderwegs das Fördergas und/oder das Kunststoffgranulat gezielt zu befeuchten. Es ist zusätzlich oder alternativ möglich, dass die Befeuchtungseinheit dadurch gebildet wird, dass feuchtes Kunststoffgranulat dem Fördergas zugegeben wird. Die Feuchte des Kunststoffgranulats wird an das Fördergas zumindest anteilig abgegeben, so dass die Voraussetzungen für die pneumatische Förderung unter Feuchtezugabe gewährleistet sind. Eine Flüssigkeitszufuhr aus einem separaten Flüssigkeitsanschluss kann dadurch entbehrlich sein. Als feuchtes Kunststoffgranulat kann Polyolefin-Granulat dienen, das nach einer Unterwasser-Granulierung nicht oder lediglich unvollständig getrocknet wird, z. B. durch mechanische Entwässerung. Der apparative Aufwand für die Befeuchtung ist durch die Verwendung von feuchtem Kunststoffgranulat reduziert. Als feuchtes Fördergas im Sinne der Erfindung ist Fördergas zu verstehen mit einer relativen Feuchte von mindestens 60 % und höchstens 200 % am Ende der Förderleitung. Die relative Feuchte ist dabei definiert als das Verhältnis der Masse des im Fördergas enthaltenen Dampfes der Flüssigkeit zur größtmöglichen Masse an Dampf dieser Flüssigkeit, die das Fördergas unter den gegebenen Bedingungen wie Druck und Temperatur aufnehmen kann. Bei einer relativen Feuchte von 100 % liegt eine vollständige Sättigung des Fördergases mit Flüssigkeit vor. Eine weitere Zugabe an Flüssigkeit führt zu einer Übersättigung des Fördergases und damit zum Auskondensieren der Flüssigkeit. Es ist insbesondere denkbar, dass das Fördergas entlang der Förderleitung mit der Flüssigkeit übersättigt ist. Es ist insbesondere denkbar, dass die relative Feuchte des Fördergases am Zielort, insbesondere in der Abtrennvorrichtung, maximal die Sättigungsgrenze erreicht.

Als Zielort der Förderanlage ist insbesondere ein Bereich zu verstehen, in dem die Verpackung und/oder Verladung des Kunststoffgranulats in eine Verpackung oder einen Transportbehälter erfolgt. Ein Transportbehälter kann ein transportierbarer Behälter, beispielsweise ein Container, sein.

Insbesondere ist es denkbar, dass das Fördergas entlang der Förderleitung, insbesondere stromaufwärts des Zielortes, eine relative Feuchte aufweist, die größer ist als 100 %. Es ist auch denkbar, dass entlang der Förderleitung stromaufwärts des Zielortes, Speicherbehälter angeordnet sind, in die das Kunststoffgranulat mit Fördergas mit einer relativen Feuchte von bis zu 100 % gefördert wird.

Es ist insbesondere eine Erkenntnis der vorliegenden Erfindung, dass eine mögliche Kondensation von Wasser aus dem Fördergas in einem stromaufwärts des Zielortes angeordneten Speicherbehälters akzeptiert werden kann, solange am Zielort mittels der Abtrennvorrichtung ein zuverlässiges Abtrennen des feuchten Fördergases erfolgt.

Eine Förderanlage gemäß Anspruch 2 ermöglicht eine unmittelbare Speicherung des Kunststoffgranulats am Zielort. Insbesondere können am Zielort mehrere Empfangsbehälter vorgesehen sein. Ein Empfangsbehälter in diesem Sinne ist ein stationäres oder mobiles Aufnahmegefäß, in dem das Kunststoffgranulat zumindest vorübergehend oder langfristig bevorratet werden kann. Ein Empfangsbehälter ist insbesondere ein Speichersilo. Ein Empfangsbehälter weist ein Aufnahmevolumen von mindestens 1 m³, insbesondere mindestens 100 m³, und insbesondere mindestens 1.000 m³ auf. Ein Empfangsbehälter kann aber auch ein auf einem Fahrzeug transportierbarer Behälter, insbesondere für einen Lastkraftwagen oder ein Schienenfahrzeug sein.

Ein Empfangsbehälter kann thermisch isoliert ausgeführt sein, um eine Abkühlung seines Inhalts in Wandnähe durch kalte Umgebung zu verringern und insbesondere zu vermeiden. Die thermische Isolierung ist insbesondere durch eine zusätzliche Isolierschicht aus einem thermisch isolierenden Material ausgeführt.

Bei einer Förderanlage gemäß Anspruch 3 oder 4 erfolgt die Abtrennung des feuchten Fördergases in der dem Empfangsbehälter vorgeschalteten Abtrennvorrichtung. Eine nachfolgende Förderung von der Abtrennvorrichtung in den mindestens einen Empfangsbehälter erfolgt mittels einer Zielort-Förderleitung. Bei einer derartigen Anordnung der Zielort-Förderleitung zwischen der Abtrennvorrichtung und dem mindestens einen Empfangsbehälter können kurze Förderwege realisiert werden. Es ist insbesondere möglich, eine zentrale Abtrennvorrichtung für mehrere Empfangsbehälter vorzusehen. Es ist denkbar, für jeden Empfangsbehälter eine eigene, separat zugeordnete Abtrennvorrichtung vorzusehen. Die Abtrennvorrichtung weist insbesondere einen Abtrennbehälter auf. Als Abtrennbehälter wird ein Gehäuse verstanden, das insbesondere aus einem metallischen Werkstoff, insbesondere aus einem Stahlwerkstoff oder Aluminiumwerkstoff, hergestellt ist. Das Gehäuse kann alternativ aus einem Glasfaserverstärkten Kunststoff hergestellt sein. In das Gehäuse wird eine Mischung aus Kunststoffgranulat und feuchtem Fördergas zugeführt sowie das von dem Kunststoffgranulat getrennte feuchte Fördergas und das Kunststoffgranulat in den Empfangsbehälter jeweils getrennt abgeführt. Dazu kann das Gehäuse im Inneren zusätzliche Trenn-Komponenten aufweisen, die die Materialströme von Kunststoffgranulat und/oder feuchtem Fördergas vorteilhaft, insbesondere bezüglich der Abtrennung voneinander, beeinflussen. Die Abtrennung des feuchten Fördergases von dem Kunststoffgranulat findet innerhalb des Abtrennbehälters statt. Der Abtrennbehälter ist insbesondere stromaufwärts bezüglich des Empfangsbehälters angeordnet. Die Abtrennung des feuchten Fördergases findet statt, bevor das Kunststoffgranulat in den Empfangsbehälter gefördert wird. Der Abtrennbehälter weist gegenüber dem Empfangsbehälter ein reduziertes Volumen auf. Der Abtrennbehälter kann zumindest zur vorübergehenden Bevorratung des Kunststoffgranulats dienen, indem der Abtrennbehälter ein Speichervolumen für Kunststoffgranulat zur Verfügung stellt.

Eine Ausführung des Abtrennbehälters gemäß Anspruch 5 ermöglicht eine unkomplizierte und unaufwändige Realisierung der Abtrennvorrichtung. Derartige Abtrennbehälter sind in anderen Anwendungen, insbesondere zum Sichten von partikelförmigem Material, also zum Abscheiden von Feinanteilen aus einem Partikelstrom, bekannt. Feinanteile können eine Größenverteilung von 20 µm bis 500 µm, und insbesondere von 63 µm bis 500 µm aufweisen. Überraschend wurde gefunden, dass sich derartige Behälter auch als Abtrennbehälter zur Abtrennung des feuchten Fördergases eignen.

Eine Absperreinheit gemäß Anspruch 6 ermöglicht ein gezieltes selbstregulierendes Absperren der Zielort-Förderleitung zwischen dem Abtrennbehälter und dem Empfangsbehälter. Insbesondere erfolgt das Absperren in Abhängigkeit eines Füllstands des Kunststoffgranulats in dem Abscheidebehälter. Die Absperreinheit ist insbesondere eine federbelastete Klappe oder ein federbelasteter Konus. Die Absperreinheit kann auch als Zellenradschleuse ausgeführt sein, die zudem als Dosierorgan eine Dosierung des Kunststoffgranulats aus dem Empfangsbehälter heraus ermöglicht. Die Absperreinheit kann auch ein, insbesondere regelbarer Schieber sein.

Durch eine Füllstandsüberwachung gemäß Anspruch 7 ist eine geregelte Betriebsweise der Absperreinheit möglich. Mit mindestens einem Füllstandssensor kann der aktuelle Füllstand in dem Abtrennbehälter erfasst und mittels der Füllstandsüberwachung überwacht werden. Die Füllstandsüberwachung, die insbesondere mit einer zentral angeordneten Regelungseinheit in Signalverbindung steht, kann ein entsprechendes Signal an die Absperreinheit, die mit der Regelungseinheit ebenfalls in Signalverbindung steht, übermitteln, um ein Öffnen oder Schließen der Absperreinheit zumindest teilweise zu veranlassen.

Bei einer Verbindung des Zielorts mit der Förderleitung gemäß Anspruch 8 ist eine unmittelbare Förderung des Kunststoffgranulats an den Zielort gegeben. In diesem Fall ist die Abtrennvorrichtung insbesondere in dem mindestens einen Empfangsbehälter integriert. Insbesondere weist jeder Empfangsbehälter eine integrierte Abtrennvorrichtung auf. Die Förderleitung ist unkompliziert ausgeführt. Zusätzliche Abtrennbehälter sind entbehrlich.

Eine Abluftleitung am Zielort gemäß Anspruch 9 gewährleistet die Abgabe von Abluft an die Umgebung und/oder an eine Aspiration. Die Abluft weist zumindest anteilig feuchte Förderluft auf. Als Aspiration im Sinne der Erfindung wird die gezielte Abführung der Abluft über ein mit einer Absaugung verbundenes Abluftleitungssystem verstanden. Die Abluftleitung ist insbesondere an den Abtrennbehälter und/oder an den Empfangsbehälter angeschlossen.

Eine Austauschgaseinheit gemäß Anspruch 10 vereinfacht das Austauschen der feuchten Förderluft durch das, insbesondere trockene, Austauschgas. Die Austauschgaseinheit ist insbesondere an der Abtrennvorrichtung und/oder an dem Empfangsbehälter angeordnet. Die Austauschgaseinheit ermöglicht die Zuführung von Austauschgas, um die feuchte Förderluft von dem Kunststoffgranulat abzutrennen, also auszutauschen. Als Austauschgas im Sinne der Erfindung wird insbesondere separat zugeführtes Gas, beispielsweise in Form von Spülluft im Empfangsbehälter und/oder am Abtrennbehälter verstanden. Im Empfangsbehälter kann beispielsweise eine Desodorierung vorgesehen sein, um geruchsbelästigende flüchtige Anteile des Kunststoffgranulats auszuspülen, die insbesondere keine Explosionsgefahr begründen. Es ist auch denkbar, dass der Empfangsbehälter als Entgasungssilo derart ausgeführt ist, um flüchtige KohlenwasserstoffVerbindungen, wie Ethylen, Hexan und/oder Hexen und ähnliche, aus dem Kunststoffgranulat mit Hilfe des Austauschgases zu entfernen. Das Spülgas bzw. die Spülluft dient als Austauschgas. Austauschgas im Sinne der Erfindung ist aber auch Verdrängungsgas, das aus einem geschlossenen Empfangsbehälter durch Zugabe des Kunststoffgranulats in den Empfangsbehälter verdrängt wird. Das Verdrängungsgas steigt in dem Empfangsbehälter nach oben und kann dort in die Abtrennvorrichtung als Austauschgas gelangen. Als Austauschgas kann auch als Verdrängungsgas und/oder Leckluft und/oder Lagerspülung von einer Zellenradschleuse als Absperreinheit in dem Empfangsbehälter aufsteigen.

Eine Förderanlage gemäß Anspruch 11 ermöglicht eine effiziente Nutzung der Abtrennvorrichtung. Dazu sind insbesondere mehrere Förderleitungen mit einem einzigen Abtrennbehälter verbunden.

Der Aufbau einer Förderanlage gemäß Anspruch 12 ist vereinfacht und insbesondere kostensparend ausgeführt. Eine separate Heizung, insbesondere zum Erwärmen des Austauschgases, ist entbehrlich. Die Verwendung einer Heizung ist beispielsweise aus der JP H-10147433 A bekannt. Die Heizung erwärmt eine Gegengasströmung, um die Oberfläche des nassen Produkts zu trocknen. Das nasse Produkt weist einen Wassergehalt von 1 bis 20 Masse-Prozent des geförderten Produkts auf. Der Austausch von feuchtem Fördergas ist aus der JP H-10147433 A nicht bekannt.

Das Verfahren zum Fördern von Kunststoffgranulat, bei dem Kunststoffgranulat an einem Aufgabeort mit Druck beaufschlagtem Fördergas in eine Förderleitung aufgegeben und zu einem mit dem Aufgabeort in Förderverbindung stehenden Zielort gefördert wird, wobei das Fördergas und/oder das Kunststoffgranulat durch Hinzugeben von Flüssigkeit befeuchtet wird und wobei ein einer Abtrennvorrichtung ein Abtrennen des feuchten Fördergases von dem Kunststoffgranulat erfolgt, weist im Wesentlichen die Vorteile auf, die anhand der Förderanlage bereits erläutert worden sind, worauf hiermit verwiesen wird. Ein wesentlicher Vorteil ist darin zu sehen, dass Kunststoffgranulat vorteilhaft mittels feuchtem Fördergas, das insbesondere entlang der Förderleitung mindestens bereichsweise übersättigt ist, gefördert werden kann, wobei das Auskondensieren der Flüssigkeit am Zielort, insbesondere im Empfangsbehälter, zuverlässig ausgeschlossen ist.

Die Verwendung von Austauschgas zum Abtrennen des feuchten Fördergases von dem Kunststoffgranulat, wobei das feuchte Fördergas von dem Kunststoffgranulat durch Zuführen des Austauschgases abgetrennt wird, erhöht die Zuverlässigkeit des Abtrennvorgangs.

Die Durchführung eines Verfahrens, bei dem das Abtrennen des feuchten Fördergases ohne zusätzliches Erwärmen des Austauschgases erfolgt, ist unmittelbar. Für das Abtrennen des feuchten Fördergases ist ein zusätzlicher Erwärmungsschritt entbehrlich. Der Energieaufwand ist reduziert. Die Investitionskosten der zugehörigen Förderanlage sind reduziert.

Ausführungsbeispiele der Erfindung werden nachfolgend anhand der Zeichnung näher erläutert. In dieser zeigen:
- Fig. 1: eine schematische Darstellung einer erfindungsgemäßen Förderanlage, bei der ein Abtrennbehälter einer Abtrennvorrichtung mit der Förderleitung verbunden ist,
- Fig. 2: eine vergrößerte Schnittdarstellung des Abtrennbehälters gemäß Fig. 1 als Sichter,
- Fig. 3: eine schematische Darstellung eines Abtrennbehälters als Feststoffabschneider mit Austauschgaseinheit über eine separate Austauschgaszuführung,
- Fig. 4: eine Fig. 3 entsprechende Ausführung eines Abtrennbehälters mit einer Austauschgaszuführung aus dem Empfangsbehälter,
- Fig. 5: eine Fig. 2 entsprechende Schnittdarstellung eines Abtrennbehälters als Zyklon-Abscheider mit Absperreinheit,
- Fig. 6 und 7: eine vergrößerte Detaildarstellung der Absperreinheit gemäß Fig. 5 als federbelastete Klappe in geschlossener und geöffneter Anordnung,
- Fig. 8 und 9: Fig. 6 und 7 entsprechende Darstellungen einer Absperreinheit als federbelasteter Konus,
- Fig. 10: eine Fig. 1 entsprechende schematische Darstellung einer Förderanlage, wobei der Abtrennbehälter oberhalb der Empfangsbehälter angeordnet ist,
- Fig. 11: eine Fig. 10 entsprechende Darstellung, wobei jedem Empfangsbehälter ein oberhalb angeordneter Abtrennbehälter zugeordnet ist,
- Fig. 12: eine Fig. 11 entsprechende Darstellung einer Förderanlage, wobei die Abtrennbehälter jeweils unmittelbar am Empfangsbehälter angeordnet sind,
- Fig. 13: eine vergrößerte Schnittdarstellung eines unmittelbar am Empfangsbehälter angeordneten Abtrennbehälters mit einer Austauschgaseinheit am Empfangsbehälter,
- Fig. 14: eine Fig. 13 entsprechende Darstellung mit der Austauschgaseinheit am Stutzen zwischen dem Abtrennbehälter und dem Empfangsbehälter,
- Fig. 15: eine Fig. 13 entsprechende Darstellung einer Abtrennvorrichtung, an die mehrere Förderleitungen angeschlossen sind,
- Fig. 16: eine Fig. 13 entsprechende Darstellung des Abtrennbehälters, bei dem als Austauschgas ausschließlich das Verdrängungsgas aus dem Empfangsbehälter genutzt wird,
- Fig. 17: eine Fig. 16 entsprechende Darstellung, wobei der Empfangsbehälter eine zur Abluftleitung hin sich verjüngende Behälterquerschnittsfläche aufweist,
- Fig. 18: eine Fig. 16 entsprechende Darstellung, wobei eine Ausströmöffnung der Förderleitung der Abluftleitung zugewandt ist.
- Fig. 19: eine Fig. 12 entsprechende schematische Darstellung einer Förderanlage, bei der der Zielort mit der Förderleitung verbunden ist,
- Fig. 20: eine vergrößerte Detailansicht eines Empfangsbehälters mit einer Lufteinspeisung gemäß Fig. 19,
- Fig. 21: eine Fig. 20 entsprechende Darstellung eines Empfangsbehälters gemäß einer weiteren Ausführung mit Aspiration, und
- Fig. 22: eine Fig. 1 entsprechende schematische Darstellung einer Förderanlage gemäß einer weiteren Ausführungsform.

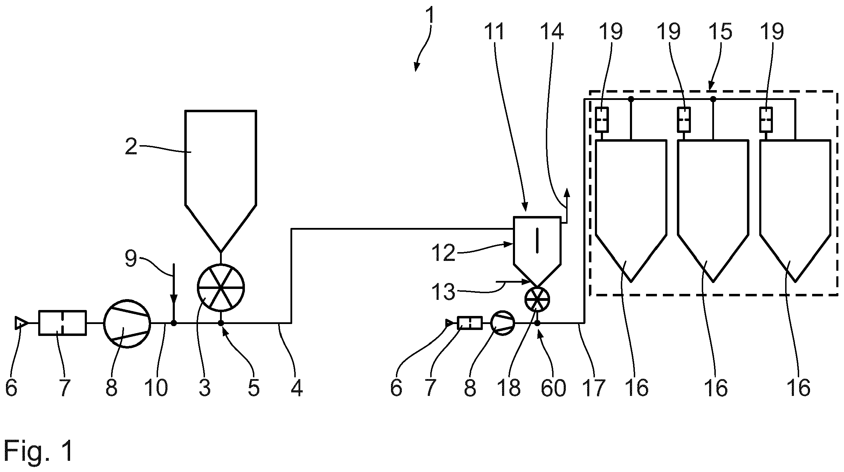

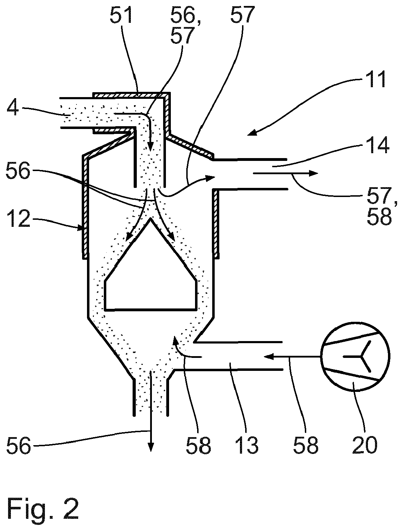

Eine in Fig. 1 und 2 gezeigte Förderanlage 1 dient zur pneumatischen Förderung von Kunststoffgranulat, das in einem Behälter 2 bevorratet ist. Mittels einer Aufgabe-Dosiereinheit 3 wird das Kunststoffgranulat aus dem Behälter 2 einer Förderleitung 4 an einem Aufgabeort 5 dosiert zugeführt. Es können auch mehrere Behälter 2 vorgesehen sein, die jeweils einer separaten Aufgabe-Dosiereinheit 3 an die Förderleitung 4 angeschlossen sind. Das Kunststoffgranulat kann aber auch vordosiert aus einem vorgelagerten Prozess, z. B. in einer Granuliereinrichtung nach einem Extruder anfallen.

An dem Aufgabeort 5 wird das der Förderleitung 4 zugeführte Kunststoffgranulat mit Druck beaufschlagtem Fördergas beaufschlagt. Das Fördergas ist Luft. Die Förderluft wird aus einer Druckluftquelle 6 durch einen Filter 7 und Verdichter 8 bereitgestellt. Durch das Verdichten wird die Förderluft mit dem erforderlichen Förderdruck bereitgestellt.

Gemäß dem gezeigten Ausführungsbeispiel ist stromaufseitig des Aufgabeorts 5 eine Befeuchtungseinheit 9 an die Druckluftleitung 10 angeschlossen. Entlang der Druckluftleitung 10 wird bis zur Flüssigkeitszuführung durch die Befeuchtungseinheit 9 Druckluft transportiert. Durch die Flüssigkeitszugabe wird die Druckluft befeuchtet und als feuchtes Fördergas zum Aufgabeort 5 gefördert. Am Aufgabeort 5 mündet die Druckluftleitung 10 in die Förderleitung 4. Entlang der Förderleitung 4 strömt das Gemisch aus Kunststoffgranulat und der feuchten Förderluft. Die Strömungsrichtung des Kunststoffgranulats ist durch den Strömungspfeil 56 charakterisiert. Die Strömungsrichtung des feuchten Fördergases ist durch den Strömungspfeil 57 charakterisiert.

Es ist auch denkbar, zusätzlich oder alternativ zu der Befeuchtungseinheit 9 eine weitere Befeuchtungseinheit stromabseitig des Aufgabeorts, insbesondere entlang der Förderleitung 4, vorzusehen. Es ist auch möglich, auf die Befeuchtung durch eine separate Wasserleitung zu verzichten, wenn beispielsweise feuchtes Produkt gefördert wird, dessen Feuchte zur Befeuchtung des Fördergases verwendet wird. Als Befeuchtungseinheit wird in diesem Fall das feuchte Produkt verstanden, das Flüssigkeit an das Fördergas abgibt.

Die Förderleitung 4 ist mit einer Abtrennvorrichtung 11, insbesondere mit einem Abtrennbehälter 12, verbunden. Die Abtrennvorrichtung 11 dient zum Abtrennen der feuchten Förderluft von dem Kunststoffgranulat mittels eines Austauschgases. Dazu ist eine Austauschgaseinheit 13 vorgesehen, um insbesondere trockenes Austauschgas der Abtrennvorrichtung 11 zuzuführen. Das Austauschgas wird im Wesentlichen im Gegenstrom zum gravimetrischen Fluss des Kunststoffgranulats geführt. Die Strömungsrichtung des Austauschgases ist durch den Strömungspfeil 58 charakterisiert. Zum Abgeben der abgetrennten, insbesondere zumindest anteilig feuchten Förderluft als Abluft weist die Abtrennvorrichtung 11, insbesondere der Abtrennbehälter 12, eine Abluftleitung 14 auf. Gemäß dem gezeigten Ausführungsbeispiel erfolgt die Abgabe der Abluft über die Abluftleitung 14 an die Umgebung. Dazu kann die Abluft mittels eines nicht dargestellten Abluftfilters oder Zyklonabscheiders noch separat gereinigt werden.

Die Abtrennvorrichtung 11 ist an einem Zielort 15 angeordnet. Als Zielort wird der Ort und/oder der Bereich bezeichnet, an dem das Kunststoffgranulat nach der Förderung gelagert oder zumindest zwischengelagert werden soll. Gemäß dem gezeigten Ausführungsbeispiel umfasst der Zielort 15 mehrere, insbesondere drei Empfangsbehälter 16, die jeweils als Lagersilo ausgeführt sind. Die Empfangsbehälter 16 am Zielort 15 bilden eine sogenannte Silobatterie. Die Abtrennvorrichtung 11 ist gemäß Fig. 1 stromaufwärts der Silobatterie angeordnet. Die Empfangsbehälter 16 sind im Wesentlichen identisch ausgeführt. Es können auch weniger als drei, insbesondere genau einer, oder mehr als drei Empfangsbehälter 16 vorgesehen sein. Es ist insbesondere denkbar, dass die Förderleitung 4 sequentiell und/oder verzweigt ausgeführt ist, so dass mehrere Förderleitungsabschnitte parallel und/oder in Reihe zueinander angeordnet und miteinander verbunden sein können. Ein derartiges Förderleitungssystem dient insbesondere zur Verbindung von einem oder mehreren Vorratsbehältern 2 zu einem oder mehreren Empfangsbehältern 16.

Die Empfangsbehälter 16 sind mit der Abtrennvorrichtung 11 über eine Zielort-Förderleitung 17 verbunden. Die Abtrennvorrichtung 11 ist über die Zielort-Förderleitung 17 mit dem Zielort 15, insbesondere mit den einzelnen Empfangsbehältern 16, verbunden.

Der Aufgabeort 5 steht mit dem Zielort 15 über die Förderleitung 4, die Abtrennvorrichtung 11 und die Zielort-Förderleitung 17 in Förderverbindung.

Dadurch, dass die Abtrennvorrichtung 11 benachbart zu dem Zielort 15 angeordnet ist, ergeben sich kurze Förderwege für das Kunststoffgranulat zwischen der Abtrennvorrichtung 11 und den Empfangsbehältern 16.

Insbesondere ist die Abtrennvorrichtung 11 bodennah angeordnet. Dadurch ist die Zugänglichkeit, insbesondere für Wartungs- und/oder Reparaturarbeiten, der Abtrennvorrichtung 11, verbessert. Für die Überwindung eines Höhenunterschieds zur Befüllung der Empfangsbehälter 16 von oben ist die Zielort-Förderleitung, die auch als Verteilungs-Förderleitung bezeichnet wird, als pneumatische Förderleitung ausgeführt. Dazu sind eine weitere Druckluftquelle 6, ein Filter 7 und ein Verdichter 8 vorgesehen, um das Kunststoffgranulat, das aus dem Abtrennbehälter 12 über eine Absperreinheit 18 in Form einer Zellenradschleuse in die Zielort-Förderleitung 17 aufgegeben wird, pneumatisch zu fördern. Die Absperreinheit 18 ist entlang des Förderwegs des Kunststoffgranulats zwischen dem Abtrennbehälter 12 und dem Empfangsbehälter 16 angeordnet.

Entlang der Zielort-Förderleitung 17 erfolgt eine Förderung mittels ungesättigter Förderluft. Feuchte Förderluft aus dem vorgelagerten Transportschritt ist in der Abtrennvorrichtung 11 von dem Kunststoffgranulat getrennt und über die Abluftleitung 14 abgeführt worden. Die entlang der Zielort-Förderleitung 17 genutzte Förderluft wird auch als Zielort-Förderluft bezeichnet. Entlang der Zielort-Förderleitung 17 ist die Zielort-Förderluft in der Regel ungesättigt, maximal aber bei 100 % relativer Feuchte. Die in der Zielort-Förderleitung 17 nach der Abtrennvorrichtung 11 eingesetzte Förderluft weist eine relative Feuchte von höchstens 100 %, insbesondere höchstens 80 %, und insbesondere höchstens 60 %, bezogen auf die Produkttemperatur und den Druck am Aufgabeort 60 der Zielort-Förderleitung 17 auf.

An einer jeweils oberen Stirnseite der Empfangsbehälter 16 ist ein Abluftfilter 19 vorgesehen, um eine Abgabe von Abluft an die Umgebung zu ermöglichen.

Anhand der Fig. 2 wird die Ausführung des Abtrennbehälters 12 näher erläutert. Der Abtrennbehälter 12 ist als Sichter, insbesondere als Umlenkgegenstromsichter, ausgeführt. An einem oberen Ende wird dem Sichter das Kunststoffgranulat mit dem feuchten Fördergas über die Förderleitung 4 zugeführt. Das Gemisch aus feuchtem Fördergas und Kunststoffgranulat fällt entlang der Schwerkraft nach unten zu der in Fig. 2 nicht dargestellten Absperreinheit. An einem unteren, der Förderleitung 4 gegenüberliegenden Ende ist an dem Abtrennbehälter 12 die Austauschgaseinheit 13 angeordnet, um trockenes Austauschgas mittels eines Gebläses 20 der Abtrennvorrichtung 11 zuzuführen.

Das eingeblasene Austauschgas strömt dem fallenden Kunststoffgranulat und dem feuchten Fördergas entgegen. Dadurch wird das feuchte Fördergas von dem Kunststoffgranulat getrennt und über die Abluftleitung 14 aus dem Abtrennbehälter 12 abgeführt. Insbesondere in einem oberen Bereich der Abtrennvorrichtung 11 kann der Abtrennbehälter 12 und/oder die Förderleitung 4 eine thermische Isolationsschicht aufweisen, um Kondensatbildung zu vermeiden.

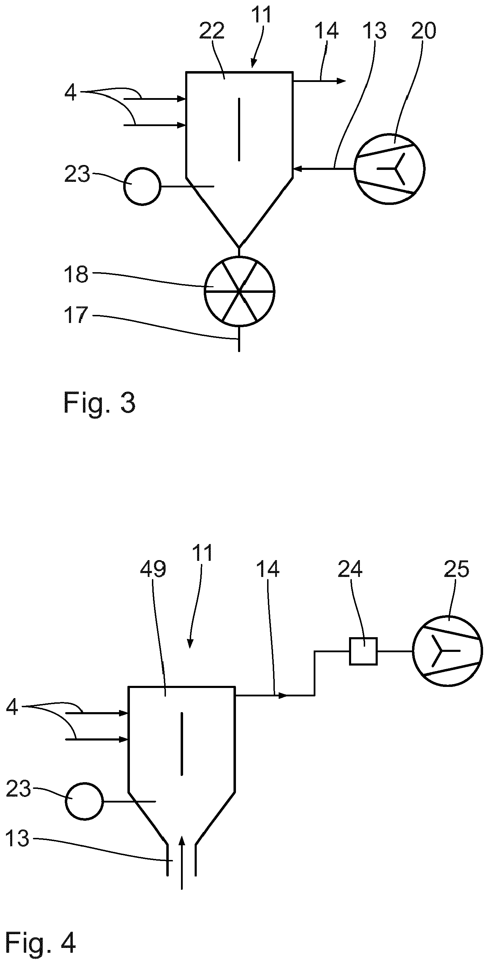

Fig. 3 zeigt eine weitere Ausführung einer Abtrennvorrichtung. Der Abtrennbehälter 22 ist als Vorabscheider ausgeführt, in den mehrere Förderleitungen 4 münden. Der Vorabscheider dient insbesondere zur Grobtrennung des feuchten Fördergases von dem Kunststoffgranulat. Überraschend wurde gefunden, dass der Vorabscheider für die Abtrennung des feuchten Fördergases sehr gut geeignet ist.

Der Abtrennbehälter 22 weist einen Füllstandsensor 23 aus, um den Füllstand in dem Vorabscheider zu erfassen. Der Füllstandsensor 23 ist mit einer nicht näher dargestellten Füllstandsüberwachung in Signalverbindung. Die Füllstandsüberwachung kann integrierter Bestandteil einer nicht näher dargestellten Steuerungseinheit sein. Der Füllstandsensor 23 und insbesondere die Füllstandsüberwachung dienen zum Verhindern eines Überlaufs des Vorabscheiders, insbesondere falls über einen längeren Zeitraum der Materialzufluss über die Förderleitungen 4 in den Vorabscheider größer ist als der Materialablauf über die Absperreinheit 18 an die Empfangsbehälter 16.

Fig. 4 zeigt eine weitere Ausführung einer Abtrennvorrichtung. Ein Unterschied besteht darin, dass bei dem Abtrennbehälter 49 die Austauschgaseinheit 13 integral ausgeführt ist. Aufströmendes Austauschgas, das als Spülgas von dem nicht dargestellten Empfangsbehälter in dem Abtrennbehälter 49 genutzt wird und mittels eines Strömungspfeils in Fig. 4 charakterisiert ist, ist beispielsweise ein Verdrängungsgasstrom, der durch Eintrag des Schüttgutvolumens in den folgenden Anlagenabschnitt, beispielsweise eine Zellenradschleuse, einen Behälter oder eine Rohrleitung, aus diesem verdrängt wird. Eine separate Zuströmöffnung für Austauschgas in dem Abtrennbehälter 49 ist dann entbehrlich. Um eine zuverlässige Abführung der Abluft über die Abluftleitung 14 zu gewährleisten, kann die Abluftleitung 14 an eine Aspiration 24 mittels eines Absaugventilators 25 abgegeben werden.

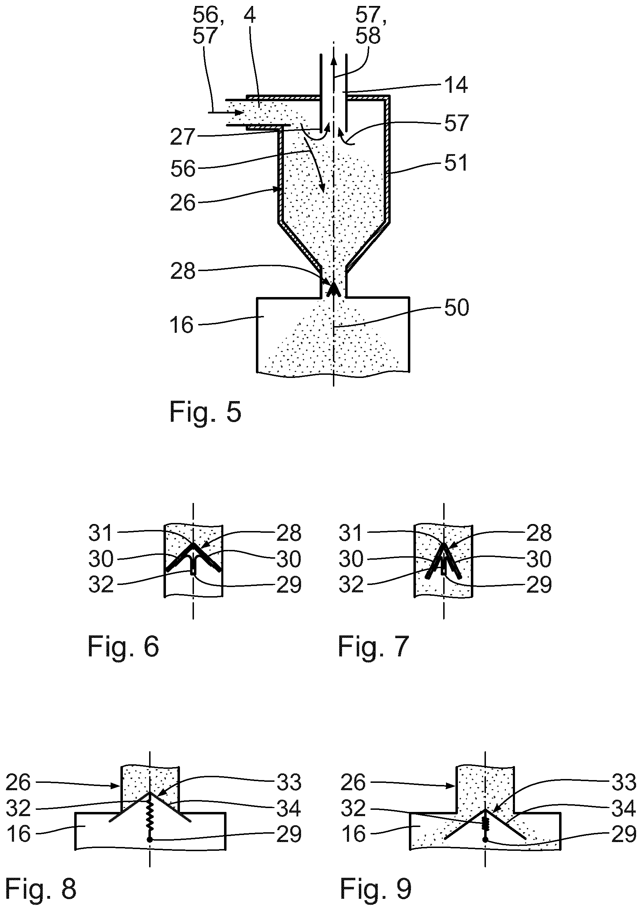

Fig. 5 bis 7 zeigen eine weitere Ausführung einer Abtrennvorrichtung. Der Abtrennbehälter 26 ist als Zyklon-Abscheider ausgeführt. Die Förderleitung 4 ist in einer Ebene senkrecht zur Längsachse 50 des Abtrennbehälters 26 zugeführt und in einer Spiralströmung um einen in den Abtrennbehälter 26 hineinragenden Absaugstutzen 27 der Abluftleitung 14 herumgeführt. In Folge dieser Spiralströmung wird das Kunststoffgranulat von dem feuchten Fördergas getrennt und das feuchte Fördergas über die Abluftleitung 14 abgeführt.

Der Zyklon-Abscheider kann an einer äußeren Mantelwand zumindest abschnittsweise eine thermische Isolierung 51 aufweisen. Die thermische Isolierung 51 ist insbesondere als zusätzliche, äußere Isolierschicht an einer Außenseite des Gehäuses des Abtrennbehälters 26 angebracht.

An dem unteren, dem Empfangsbehälter 16 zugewandten Ende ist an dem Abtrennbehälter 26 eine selbstregulierende Absperreinheit 28 in Form einer federbelasteten Klappe angeordnet, deren Funktionsweise anhand von Fig. 6 und 7 erläutert wird. Die federbelastete Klappe ist mittels einer Arretierung 29 entlang des Förderwegs von dem Abtrennbehälter 26 zu dem Empfangsbehälter 16 fixiert. An der Arretierung 29, die insbesondere zentrisch bezogen auf die Querschnittsfläche entlang des Förderwegs zwischen dem Abtrennbehälter 26 und dem Empfangsbehälter 16 angeordnet ist, sind zwei Klappenteile 30 schwenkbar um eine Schwenkachse 31 angelenkt. Die Schwenkachse 31 ist insbesondere senkrecht zu der Materialförderrichtung orientiert. Die Klappenteile 30 sind mittels Federelementen 32 derart mit einer Federkraft beaufschlagt, dass sie in eine Schließposition gemäß Fig. 6 selbsttätig verlagert werden. Die Federelemente 32 sind insbesondere als gebogene Blattfedern ausgeführt, die an einer dem Materialstrom abgewandten Unterseite der Klappenteile 30 angeordnet und mit der Arretierung 29 verbunden sind. Die Federelemente 32 sind als Druckfedern ausgeführt. Die Federelemente 32 bewirken, dass die Klappenteile 30 von der Arretierung 29 weggedrückt werden. In der Schließposition ist der Förderweg von dem Abtrennbehälter 26 zu dem Empfangsbehälter 16 verschlossen.

Wenn sich der Abtrennbehälter 26 mit Kunststoffgranulat füllt, steigt der Staudruck auf die Klappenteile 30. Sobald die von dem Staudruck auf die Klappenteile 30 resultierende Kraft die eingeprägte Federkraft des Federelements 32 übersteigt, werden die Klappenteile 30 entgegen der Federkraft 32 nach unten zu der Arretierung 29 hin gedrückt. Sobald der Staudruck in Folge reduzierter Füllhöhe in dem Abtrennbehälter 26 kleiner ist als die Federkraft, verschließt die federbelastete Klappe 30 selbsttätig. Die Absperreinheit 28 ist besonders unkompliziert und unmittelbar ausgeführt.

Fig. 8 und 9 zeigen eine weitere Ausführung einer Absperreinheit 33. Der Unterschied gegenüber der vorherigen Absperreinheit 28 besteht darin, dass die Absperreinheit 33 als federbelasteter Konus ausgeführt ist. Ein weiterer Unterschied besteht darin, dass ein einteiliger Konus 34 zum Absperren vorgesehen ist, der kegelförmig ausgeführt ist. Der Konus 34 ist in sich starr ausgeführt und an der Arretierung 29 mittels einer Druckfeder 32 axial verlagerbar angelenkt. Mit zunehmendem Staudruck auf den Konus 34 in der Schließposition gemäß Fig. 8 wird die axiale Druckfeder 32 gestaucht und damit der Konus insgesamt axial entlang des Förderwegs von dem Abtrennbehälter 26 zu dem Empfangsbehälter 16 hin verlagert und damit der Förderweg freigegeben, wie dies in Fig. 9 dargestellt ist.

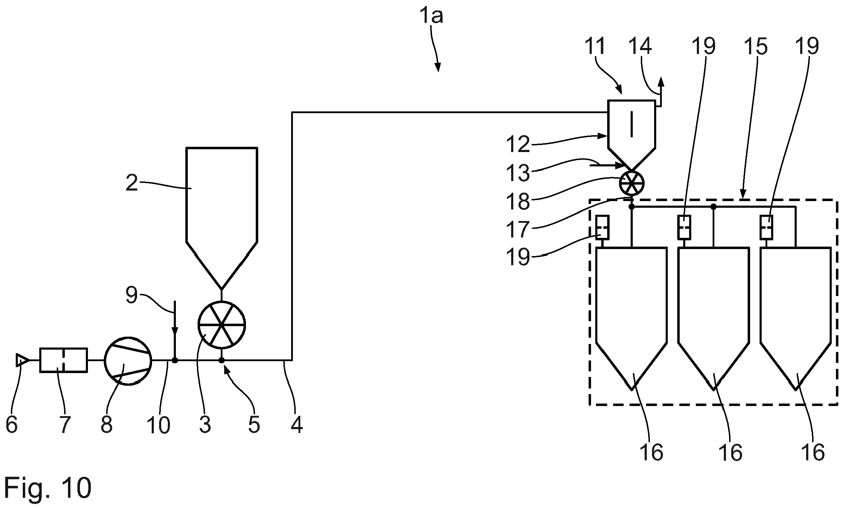

Fig. 10 zeigt eine weitere Ausführungsform einer Förderanlage 1a. Komponenten, die denjenigen entsprechen, die vorstehend unter Bezugnahme auf Fig. 1 bis 9 erläutert wurden, tragen die gleichen Bezugsziffern und werden nicht nochmals im Einzelnen diskutiert.

Bei der Förderanlage 1a ist die vor der Silobatterie angeordnete Abtrennvorrichtung 11 oberhalb der Empfangsbehälter 16 angeordnet. Dadurch ist der Förderweg von der Abtrennvorrichtung 11 zu den Empfangsbehältern 16 zusätzlich verkürzt. Zusätzlich oder alternativ zu einer kurzen pneumatischen Förderung kann die Förderung von dem Abtrennbehälter 12 zu den Empfangsbehältern 16 insbesondere selbsttätig in Folge der Schwerkraft erfolgen. Die Zielort-Förderleitung 17 weist insbesondere lediglich Fallleitungen auf, die insbesondere geneigt angeordnet sein können. Eine pneumatische Förderung entlang der Zielort-Förderleitung 17 ist nicht zwingend erforderlich.

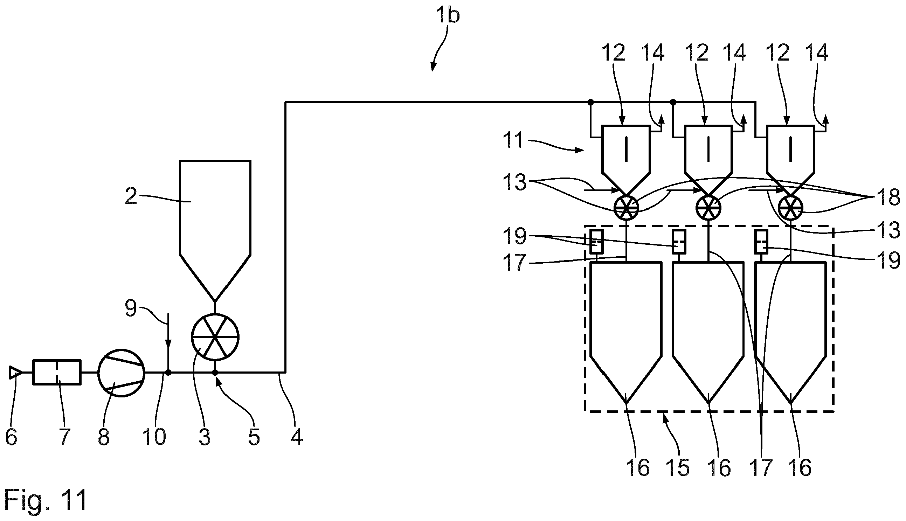

Fig. 11 zeigt eine weitere Ausführungsform einer Förderanlage 1b. Komponenten, die denjenigen entsprechen, die vorstehend unter Bezugnahme auf Fig. 1 bis 10 erläutert wurden, tragen die gleichen Bezugsziffern und werden nicht nochmals im Einzelnen diskutiert. Bei der Förderanlage 1b ist jedem Empfangsbehälter 16 eine eigene Abtrennvorrichtung 11 zugeordnet. Der Förderweg entlang der Zielort-Förderleitung 17 ist zusätzlich reduziert und besteht insbesondere ausschließlich aus einer Fallleitung, die die Absperreinheit 18 unmittelbar mit dem Empfangsbehälter 16 verbindet.

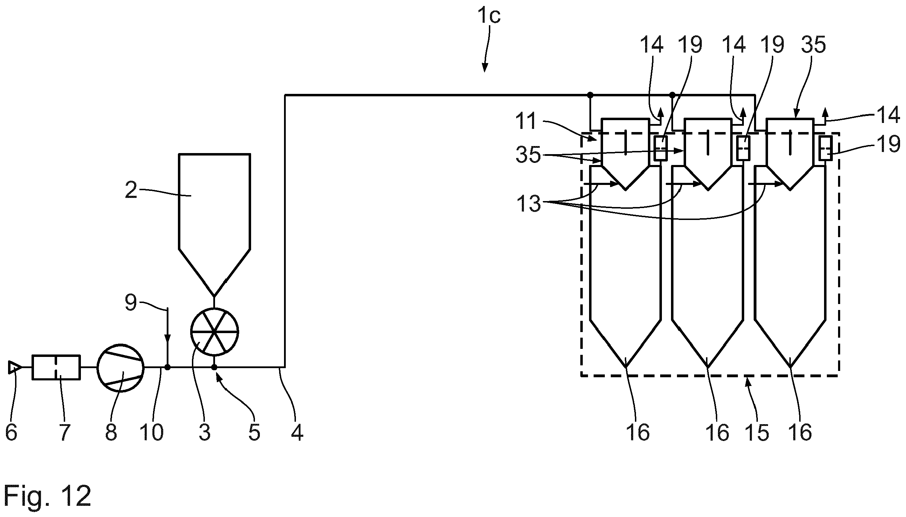

Fig. 12 zeigt eine weitere Ausführungsform einer Förderanlage 1c. Komponenten, die denjenigen entsprechen, die vorstehend unter Bezugnahme auf Fig. 1 bis 11 erläutert wurden, tragen die gleichen Bezugsziffern und werden nicht nochmals im Einzelnen diskutiert. Bei der Förderanlage 1c münden die Abtrennbehälter 35 jeweils unmittelbar in den zugehörigen Empfangsbehälter 16. Absperreinheiten sind an den Abtrennbehältern 35 jeweils nicht vorgesehen. Die Zielort-Förderleitung 17 ist minimiert. Ein separater Leitungsabschnitt, der außerhalb des Abtrennbehälters 35 und außerhalb des Empfangsbehälters 16 angeordnet ist, ist nicht vorgesehen.

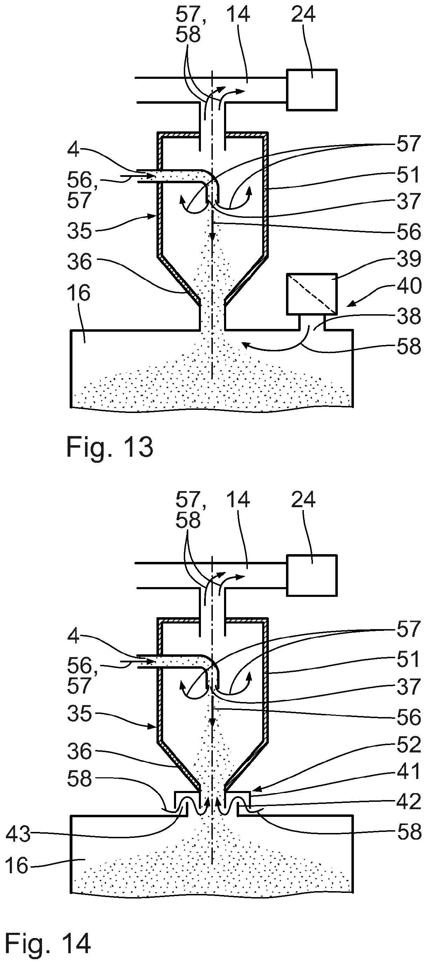

Der Abtrennbehälter 35 ist detaillierter in Fig. 13 gezeigt. Der Abtrennbehälter 35 weist im Wesentlichen eine zylindrische Grundform auf und ist mit einem konisch zulaufenden Stutzen an einer oberen Stirnwand des Empfangsbehälters 16 unmittelbar aufgesetzt.

An einer äußeren Zylindermantelfläche ist dem Abtrennbehälter 35 die Förderleitung 4 zugeführt. Die Förderleitung 4 ragt in den Abtrennbehälter 35 hinein. Über eine Abgabeöffnung 37 der Förderleitung 4 wird das Gemisch aus feuchter Förderluft und Kunststoffgranulat dem Abtrennbehälter 35 zugeführt. Gemäß dem gezeigten Ausführungsbeispiel ist die Abgabeöffnung 37 dem Empfangsbehälter 16 zugewandt. Insbesondere im Endbereich der Förderleitung 4 ist ein Rohrbogensegment vorgesehen, um die zuvor im Wesentlichen horizontale Orientierung der Förderleitung 4 mit einem 90°-Bogen vertikal nach unten zu führen. Das Kunststoffgranulat kann aus der Abgabeöffnung 37 durch den konischen Stutzen 36 unmittelbar in den Empfangsbehälter 16, insbesondere schwerkraftbedingt, fallen.

An der oberen Stirnseite des Empfangsbehälters 16 ist eine Zuluftöffnung 38 vorgesehen, an der ein Zuluftfilter 39 angeordnet ist. Die durch den Zuluftfilter 39 gefilterte Zuluft dient als Austauschgas und strömt der Materialförderrichtung des Kunststoffgranulats entgegen der Schwerkraft von dem Empfangsbehälter 16 in den Abtrennbehälter 35 und bewirkt das Abtrennen des feuchten Fördergases in dem Abtrennbehälter 35 von dem Kunststoffgranulat. Das feuchte Fördergas wird über die Abluftleitung 14, die an eine nicht dargestellte Aspiration 24 angeschlossen ist, abgeführt.

Die Aspiration 24 kann optional noch Luft zusätzlich zu der Förderluft absaugen, d. h. eine Luftströmung durch den Empfangsbehälter 16 und den Abtrennbehälter 35 in die Aspiration bewirken. Die Zuluftöffnung 38 und der Zuluftfilter 39 bilden eine Austauschgaseinheit 40 für den Abtrennbehälter 35.

Fig. 14 zeigt eine weitere Ausführung einer Austauschgaseinheit. Die Austauschgaseinheit 52 ist gemäß Fig. 14 als Spaltöffnung im Bereich des Stutzens 36 ausgeführt. Dazu weist der Abtrennbehälter 35 eine Manschette 41 auf, die auf einen Stirnseitenstutzen 42 aufgesetzt ist. Die zwischen der Manschette 41 und dem Stirnseitenstutzen 42 angeordnete Spaltöffnung bildet eine Austauschgaseinheit 52. Entlang des Umfangs um die Längsachse des Empfangsbehälters 16 und des Abtrennbehälters 35 sind mehrere, insbesondere langlochförmige Spaltöffnungen 43 vorgesehen, die eine Labyrinthströmung für die Spülluft ermöglichen. Durch die gezielte Anordnung der Spaltöffnungen 43 kann der Empfangsbehälter 16 selbst geschlossen ausgeführt sein. Es ist denkbar, vor den Spaltöffnungen 43 Zuluft-Filter 39 vorzusehen. Das abgetrennte feuchte Fördergas wird über die Abluftleitung 14 abtransportiert.

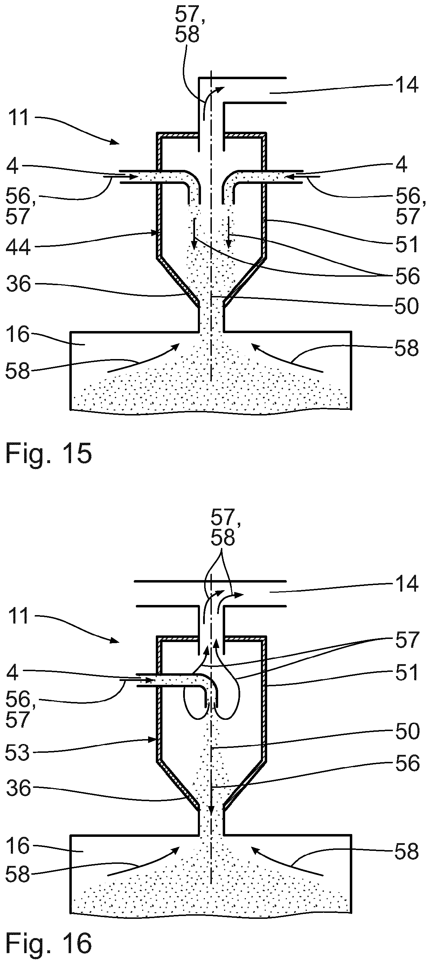

Fig. 15 zeigt eine weitere Ausführung einer Abtrennvorrichtung. Der Abtrennbehälter 44 ist ein Kleinbehälter, insbesondere ein Abscheidetopf, dem mehrere, insbesondere zwei, Förderleitungen 4 zugeführt sind. Dadurch ergibt sich eine effiziente Nutzung der Abtrennvorrichtung 11 mit mehreren Förderleitungen im Abtrennbehälter 44. Gemäß dem gezeigten Ausführungsbeispiel sind die beiden Förderleitungsenden in dem im Wesentlichen zylindrischen Abtrennbehälter 44 bezüglich dessen Längsachse 50 diametral gegenüberliegend in einer Ebene senkrecht zur Längsachse 50 angeordnet. Es ist auch denkbar, dass die verschiedenen Förderleitungen 4 entlang der Längsachse 50 des Abtrennbehälters 44 versetzt, also höhenversetzt, angeordnet sein können. Die Anordnung der Förderleitungen 4 bezüglich einer Drehposition zur Längsachse 50 kann unregelmäßig sein. Insbesondere können auch mehr als zwei Förderleitungen 4 in ein und denselben Abtrennbehälter 44 münden.

Als Austauschgas dient beispielsweise die aus dem Empfangsbehälter 16 verdrängte Luft in Form von Verdrängungsgas, das gemäß der Strömungspfeile 58 charakterisiert ist. Zusätzlich kann eine nicht dargestellte Entgasung vorgesehen sein, um zusätzliche Spülluft in den Empfangsbehälter 16 einzuleiten.

Fig. 16 zeigt eine weitere Ausführung einer Abtrennvorrichtung. Bei dem Abtrennbehälter 53 ist die Austauschgaseinheit integriert ausgeführt, insbesondere indem das Austauschgas als Verdrängungsgas aus dem Empfangsbehälter 16 stammt. Der Verdrängungsgasstrom wird durch den eintretenden Volumenstrom des Kunststoffgranulats in dem Empfangsbehälter 16 verdrängt. Ein dadurch verursachter Verdrängungsgasstrom strömt durch den Empfangsbehälter 16 entgegen der Schwerkraft nach oben und kann zur Spülung, also zum Austausch des feuchten Fördergases in dem Abtrennbehälter 53 verwendet werden. Der Verdrängungsgasstrom ist durch den Strömungspfeil 58 charakterisiert.

Bei dieser Ausführungsform kann der Empfangsbehälter 16 besonders unkompliziert und kompakt ausgeführt sein. Zusätzliche Komponenten, insbesondere für die Austauschgaseinheit, sind entbehrlich. Das verdrängte feuchte Fördergas wird über die Abluftleitung 14 abgegeben, beispielsweise direkt an die Umgebung oder optional an eine nicht dargestellte Aspiration.

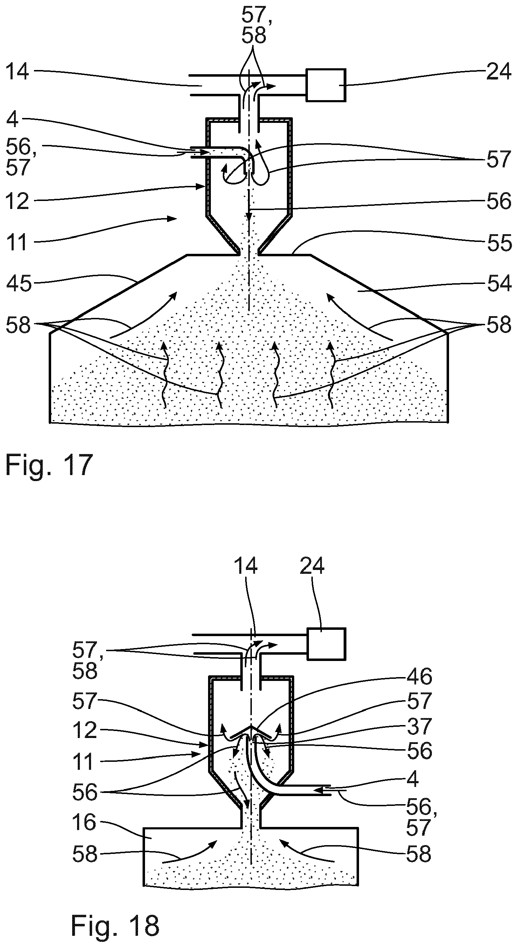

Fig. 17 zeigt eine weitere Ausführung eines Empfangsbehälters. Der Empfangsbehälter 54 weist eine zur Abluftleitung 14 hin sich verjüngende Behälterquerschnittsfläche auf. Dadurch werden schlecht durchströmte Eckenbereiche vermieden. Der Empfangsbehälter 54 weist also einen oben angeordneten Konusabschnitt 45 auf, so dass die dem Abtrennbehälter 12 zugewandte Stirnfläche 55 eine reduzierte Fläche aufweist.

Als Austauschgaseinheit dient eine Spülluftzufuhr des Empfangsbehälters 54, insbesondere im Bereich des unteren Konus. Die Spülluft, die in dem Empfangsbehälter 54 entgegen der Schwerkraft nach oben steigt, kann unmittelbar in den auf dem Empfangsbehälter 54 aufgesetzten Abtrennbehälter 12 gelangen und in der bereits geschilderten Weise das feuchte Fördergas von dem Kunststoffgranulat abtrennen.

Fig. 18 zeigt eine weitere Ausführung einer Abtrennvorrichtung. Bei der Abtrennvorrichtung 11 ist die Abgabeöffnung 37 der Förderleitung der Abluftleitung 14 zugewandt. Im Bereich der Abgabeöffnung 37, insbesondere oberhalb der Abgabeöffnung 37, ist eine Prallplatte 46 angeordnet. Die Prallplatte 46 ist insbesondere in Form einer Kegelfläche ausgeführt, wobei die Kegelspitze dem Empfangsbehälter 16 abgewandt ist.

Über die Förderleitung 4 wird das Gemisch aus Kunststoffgranulat und feuchtem Fördergas über die Abgabeöffnung 37 entgegen der Schwerkraft abgegeben. Das vergleichsweise schwere Kunststoffgranulat kann in Folge der Schwerkraft und/oder durch Kontakt mit der Prallplatte 46 nach unten in den Empfangsbehälter 16 strömen. Das feuchte Fördergas kann unmittelbar nach oben in die Abluftleitung 14 abströmen. Das feuchte Fördergas wird entlang der gewünschten Abluftströmung bereits dem Abtrennbehälter 12 zugeführt. Insbesondere wird die Förderleitung 4 dem Abtrennbehälter 12 von unten zugeführt. Die Förderleitung 4 kann an der Silobatterie, insbesondere dem Empfangsbehälter 16, platzsparend an einer Oberseite geführt und befestigt werden.

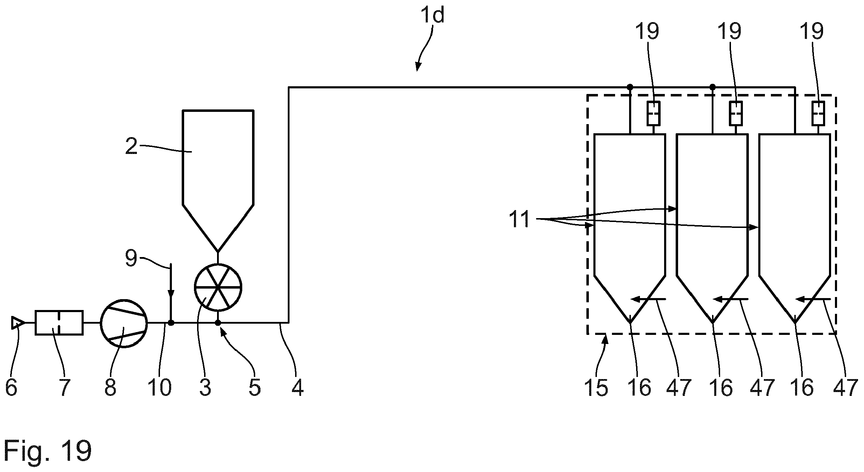

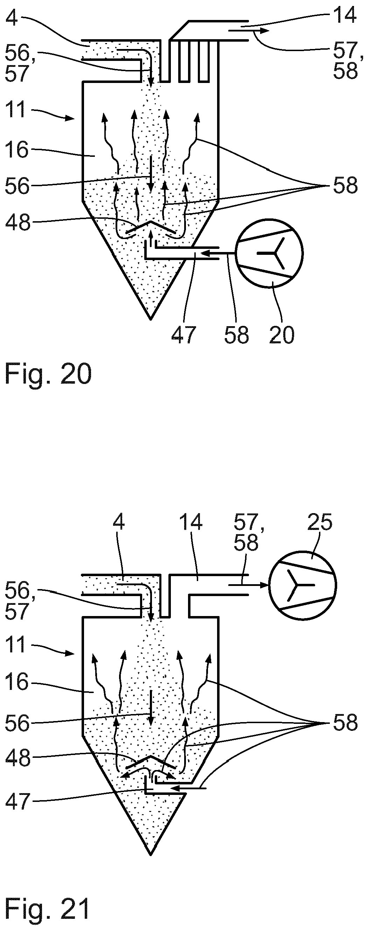

Fig. 19 und 20 zeigen eine weitere Ausführungsform einer Förderanlage 1d. Komponenten, die denjenigen entsprechen, die vorstehend unter Bezugnahme auf Fig. 1 bis 18 erläutert wurden, tragen die gleichen Bezugsziffern und werden nicht nochmals im Einzelnen diskutiert.

Bei der Förderanlage 1d ist der Zielort 15 mit der Förderleitung 4 verbunden. Die jeweiligen Abtrennvorrichtungen 11 sind in den Empfangsbehältern 16 integriert. Die Zuführung von Kunststoffgranulat mit feuchtem Fördergas erfolgt über eine oder mehrere Förderleitungen 4 unmittelbar in den Empfangsbehälter 16. Das dem Empfangsbehälter 16 zugeführte feuchte Fördergas wird durch Austauschgas, das im unteren Konusbereich des Empfangsbehälters 16 als Spülluft zugeführt wird, unmittelbar abgetrennt. Die Spülleitung am unteren Konusbereich des Empfangsbehälters 16 bildet die Austauschgaseinheit 47. Die Zuführung des Austauschgases über die Austauschgaseinheit 47 erfolgt mittels des Spülgasgebläses 20.

Gemäß dem gezeigten Ausführungsbeispiel kann im Bereich der Spülgaszuführung für den Empfangsbehälter 16 eine Luftumlenkplatte 48 angeordnet sein.

Fig. 21 zeigt eine weitere Ausführung einer in den Empfangsbehälter 16 integrierten Abtrennvorrichtung 11. Der Unterschied gegenüber dem vorherigen Ausführungsbeispiel besteht darin, dass eine Aspiration 24 an der Abluftleitung 14 vorgesehen ist.

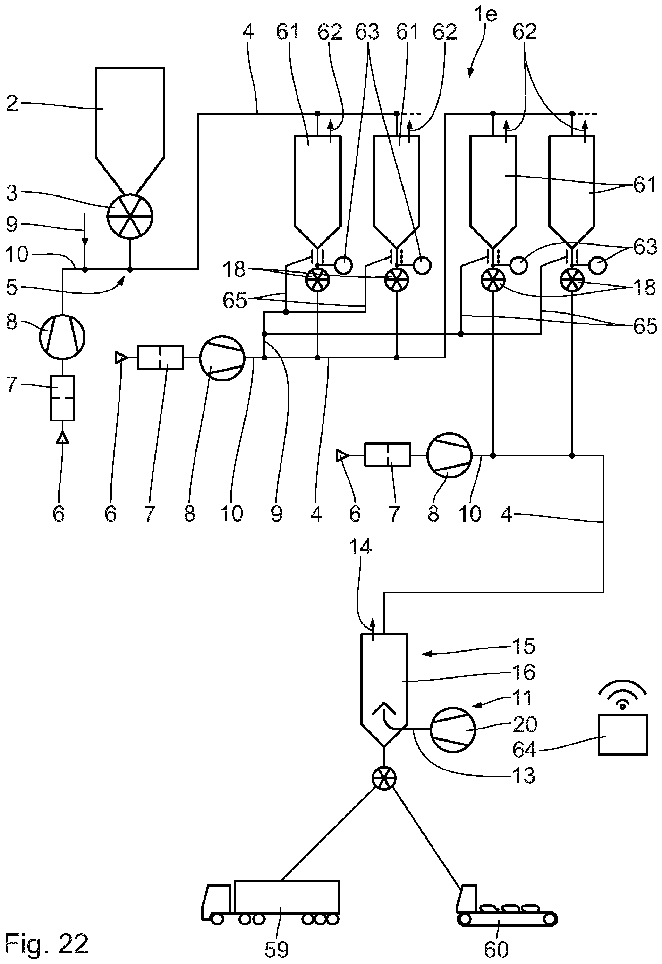

Fig. 22 zeigt eine weitere Ausführungsform einer Förderanlage le. Komponenten, die denjenigen entsprechen, die vorstehend unter Bezugnahme auf Fig. 1 bis 21 erläutert wurden, tragen die gleichen Bezugsziffern und werden nicht nochmals im Einzelnen diskutiert.

Bei der Förderanlage 1e ist am Zielort 15 der Empfangsbehälter 16 in Form eines Verladesilos ausgeführt. Es können auch mehrere Verladesilos 16 am Zielort 15 vorgesehen sein.

An der Unterseite des Empfangsbehälters 16 wird über die Austauschgaseinheit 13 Austauschgas dem Empfangsbehälter 16 zugeführt. Das feuchte Fördergas, das zusammen mit dem Kunststoffgranulat über die Förderleitung 4 dem Empfangsbehälter 16 an der oberen Stirnseite zugeführt wird, kann über die ebenfalls an der oberen Stirnseite angeordnete Abluftleitung 14 entweichen. Am Zielort 15 ist ein zuverlässiges Abtrennen des feuchten Fördergases vom Kunststoffgranulat gewährleistet.

Das Kunststoffgranulat wird in dem Verladesilo zwischengelagert und zum weiteren Transport auf ein Transportfahrzeug 59 oder einen transportierbaren Behälter abgegeben und/oder in einer Verpackungsmaschine 60 in Säcke abgesackt.

Im Unterschied zu den vorherigen Ausführungsbeispielen sind entlang der Förderleitung 4 bei der Förderanlage 1e mehrere Speicherbehälter 61 parallel zueinander und/oder entlang der Förderleitung 4 hintereinander angeordnet. Wie in Fig. 22 angedeutet, können auch jeweils mehr als zwei Speicherbehälter 61 parallel nebeneinander an die Förderleitung angeschlossen sein. Es ist auch denkbar, dass jeweils nur ein Speicherbehälter 61 vorgesehen ist. Es ist auch denkbar, mehr als zwei Stufen hintereinander angeordneter Speicherbehälter 61 vorzusehen.

Die Speicherbehälter 61 können beispielsweise als Mischsilo, als Entgasungssilo oder als Lagersilo ausgeführt sein. Die Speicherbehälter 61 weisen jeweils eine Abscheideleitung 62 auf, die gemäß dem gezeigten Ausführungsbeispiel jeweils an der oberen Stirnseite des Speicherbehälters 61 angeordnet ist. Die Abscheideleitung 62 ermöglicht die Abscheidung von Förderluft aus dem Speicherbehälter 61. Ein aktiver Gasaustausch mittels eines Austauschgases findet in den Speicherbehältern 61 nicht statt.

An den Speicherbehältern 61 ist jeweils eine Absperreinheit 18 in Form eines Zellenrads vorgesehen. Zwischen der jeweiligen Absperreinheit 18 eines Speicherbehälters 61 und dem Speicherbehälter 61 ist ein Sensorelement 63 zur Feuchtemessung des Kunststoffgranulats angeordnet. Das Sensorelement 63 ist mit einer schematisch dargestellten Steuerungseinheit 64 in Signalverbindung. Die Signalverbindung kann kabelgebunden oder kabellos erfolgen. Gemäß dem gezeigten Ausführungsbeispiel ist die Steuerungseinheit 64 kabellos über Funkverbindung mit dem Sensorelement 63 verbunden.

Der Messwert, der mittels des Sensorelements 63 ermittelt wird, kann als Regelparameter für die Einspeisung von Wasser mittels der Befeuchtungseinheit 9 genutzt werden. In diesem Fall ist die Steuerungseinheit 64 als Regelungseinheit 64 ausgeführt, die bidirektional mit dem Sensorelement 63 und dem Befeuchtungseinheiten 9 in Verbindung steht, um die Feuchtezugabe in Abhängigkeit von der tatsächlichen Feuchte des Kunststoffgranulats festzulegen.

Jeweils an der Unterseite der Speicherbehälter 61 ist eine Kondensatablaufleitung 65 angeordnet. Die Kondensatablaufleitung 65 dient zum Sammeln und gezielten Abführen von Kondensat aus dem Speicherbehälter 61. Dadurch ist insbesondere vermieden, dass kondensierendes Wasser sich bis in den Speicherbehälter 61 zurückstaut. Insbesondere kann die nachgeschaltete Regelung der Feuchtezugabe präziser durchgeführt werden.

Das Kondensat kann über die Kondensatablaufleitung 65 mindestens einer der Befeuchtungseinheiten 9 rückgeführt werden. Das Kondensat aus dem Speicherbehälter 61 kann für die Befeuchtung des Fördergases entlang der Förderleitung 4 stromaufwärts und/oder stromabwärts genutzt werden. Auf die Rückführung des Kondensats kann auch verzichtet werden.

Entlang des letzten des Förderabschnitts der Förderleitung 4 erfolgt keine zusätzliche Befeuchtung des Fördergases. Entlang der Förderleitung 4 ist weder eine Befeuchtungs-Einheit 9 noch eine Verbindung mit der Kondensatabführleitung 65 vorgesehen.

Die Befeuchtung des Fördergases entlang des letzten Förderabschnitts der Förderleitung 4 kann dadurch erfolgen, dass kondensiertes Wasser aus dem Speicherbehälter 61 zusammen mit dem Kunststoffgranulat gefördert wird. Die Flüssigkeitszufuhr in die Förderleitung 4 erfolgt aus den Speicherbehältern 61.

## Patentansprüche

1. Förderanlage für Kunststoffgranulat umfassend
- einen Aufgabeort (5), an dem das Kunststoffgranulat mit Druck beaufschlagtem Fördergas in eine Förderleitung (4) aufgegeben wird,
- einen mit dem Aufgabeort (5) in Förderverbindung stehenden Zielort (15),
- eine Befeuchtungseinheit (9) zum Befeuchten des Fördergases und/oder des Kunststoffgranulats durch Hinzugeben von Flüssigkeit,
**dadurch gekennzeichnet, dass** am Zielort (15) eine Abtrennvorrichtung (11) zum Abtrennen des feuchten Fördergases von dem Kunststoffgranulat vorgesehen ist.

2. Förderanlage gemäß Anspruch 1, **dadurch gekennzeichnet, dass** am Zielort (15) mindestens ein Empfangsbehälter (16) angeordnet ist.

3. Förderanlage gemäß Anspruch 1 oder 2, **dadurch gekennzeichnet, dass** die Abtrennvorrichtung (11) an die Förderleitung (4) angeschlossen ist, wobei die Abtrennvorrichtung (11) über mindestens eine Zielort-Förderleitung (17) mit dem Zielort (15) verbunden ist.

4. Förderanlage gemäß Anspruch 3, **dadurch gekennzeichnet, dass** die Abtrennvorrichtung (11) einen mit dem Empfangsbehälter (16) verbundenen Abtrennbehälter (12) aufweist, wobei insbesondere mehrere Empfangsbehälter (16) mit dem Abtrennbehälter (12) verbunden sind.

5. Förderanlage gemäß Anspruch 4, **dadurch gekennzeichnet, dass** der Abtrennbehälter (12) ein Feststoff-Abscheidebehälter ist, der insbesondere als Vorabscheider, als Totalabscheider, als Zyklon oder als Sichter, insbesondere als Umlenkgegenstromsichter, ausgeführt ist.

6. Förderanlage gemäß Anspruch 4 oder 5, **dadurch gekennzeichnet, dass** zwischen dem Abtrennbehälter (12) und dem Empfangsbehälter (16) eine Absperreinheit (18; 28; 33) angeordnet ist.

7. Förderanlage gemäß einem der Ansprüche 4 bis 6, **dadurch gekennzeichnet, dass** der Abtrennbehälter (12) eine Füllstandüberwachung mit mindestens einem Füllstandsensor (23) aufweist.

8. Förderanlage gemäß Anspruch 1 oder 2, **dadurch gekennzeichnet, dass** der Zielort (15) mit der Förderleitung (4) verbunden ist, wobei die Abtrennvorrichtung (11) insbesondere in dem Empfangsbehälter (16) integriert ist.

9. Förderanlage gemäß einem der vorstehenden Ansprüche, **dadurch gekennzeichnet, dass** am Zielort (15) eine Abluftleitung (14) an die Förderanlage (1) angeschlossen ist zur Abgabe von zumindest anteilig feuchter Förderluft aufweisender Abluft an die Umgebung und/oder an eine Aspiration, wobei die Abluftleitung (14) insbesondere an den Abtrennbehälter (12) und/oder an den Empfangsbehälter (16) angeschlossen ist.

10. Förderanlage gemäß einem der vorstehenden Ansprüche, **dadurch gekennzeichnet, dass** eine Austauschgaseinheit (13) vorgesehen ist zum Austauschen der feuchten Förderluft durch das Austauschgas, wobei die Austauschgaseinheit (13) an der Abtrennvorrichtung (11) und/oder an dem Empfangsbehälter (16) angeordnet ist.

11. Förderanlage gemäß einem der vorstehenden Ansprüche, **dadurch gekennzeichnet, dass** mehrere Förderleitungen (4) mit der Abtrennvorrichtung (11), insbesondere mit dem Abtrennbehälter, verbunden sind.

12. Förderanlage gemäß einem der vorstehenden Ansprüche, **dadurch gekennzeichnet, dass** für die Abtrennvorrichtung (11) eine Heizung, insbesondere zum Erwärmen des Austauschgases, entbehrlich ist.
